# EUROPEAN PATENT SPECIFICATION

(11) **EP 2 087 784 B1**
(45) Date of publication and mention of the grant of the patent: **12.01.2011**
(21) Application number: 09001758.3
(22) Date of filing: 09.02.2009
(51) Int. Cl.: A01B 69/00, B60D 1/58, B62D 13/02

(54) **Transmission mechanism for angle sensor**
Übertragungsmechanismus für Winkelsensoren
Mécanisme de transmission pour capteur d'angle

(30) Priority: 08.02.2008 DK 200800186; 28.03.2008 DK 200800466
(43) Date of publication of application: 12.08.2009
(73) Proprietor: HARDI INTERNATIONAL A/S, 2630 Taastrup (DK)
(72) Inventor: Schmidt, Bjarne, 2000 Frederiksberg (DK); Larsen, Torben, 4791 Borre, Møn (DK)
(74) Representative: Sundien, Thomas

(56) References cited:
- EP-A- 2 025 536
- US-A- 4 122 390

## Description

### FIELD OF THE INVENTION

The present invention relates to transmission mechanisms to be used when connecting an angle sensor between two equipment parts such as an implement and a tractor, where the angle sensor is adapted to measure the angle between the equipment parts.

### BACKGROUND OF THE INVENTION

When treating crop in a field, a tractor with an implement, e.g. a tractor connected to an implement such as a sprayer or a slurry spreader, is used where the implement is pulled through the field for treating the crop. When using a tractor with a sprayer, the tractor drives through the fields with crop to be sprayed and in order to minimize the damage on the crop it is of interest that the wheel of the tractor and the wheels of the sprayer follows the same wheel track.

This problem has been solved by measuring the angle between the tractor and the spraying machine and then controlling the direction of the wheels of the spraying machine accordingly, thus ensuring that the wheels of the spraying machine follow the wheel track of the tractor.

Different techniques for performing these measurements exist and generally they are all based on an angle sensor which comprises two angular displaceable parts, where the angle between these parts are measured and e.g. converted to an electrical signal. In one embodiment the angle sensor is positioned above the connection shaft between the tractor and the implement. One part of the angle sensor is connected to the implement via a rod and the angular displacement of this rod then influences the angle sensor measuring the shaft angle between the tractor and the implement. A problem with this method is that it is required that the axis of the angle sensor is positioned directly above the connection shaft which requires special arrangements in this area, and further an electrical connection to the angle sensor is exposed to damage. One alternative solution solving this particular problem is to replace the rod connection to the angle sensor with a fork connection, where the angle sensor is connected to the tractor via two spaced apart connections. This makes it possible to mount the angle sensor axis away from the connection shaft axis.

Apart from the practical problems of arranging the angle sensor between the tractor and the implement, the actual measurement of the angle is also challenging due to the motions of the tractor and the implement. In order for the wheels to follow the tracks of the tractor only the angle between the tractor and implement must be fed to the system controlling the direction of the wheels of the implement. This, however, implies that all other rotations and displacements cannot affect or disturb the measurement of the angle between the tractor and the implement. The angle between the tractor and the implement is also known as yaw. The two other rotation angles roll and pitch must therefore be isolated from the measurement of yaw. Due to the connection or hitch between the tractor and the implement, the measurement of yaw must not be affected by unavoidable displacements in the connection or hitch. Such displacements are also known as slack or clearance.

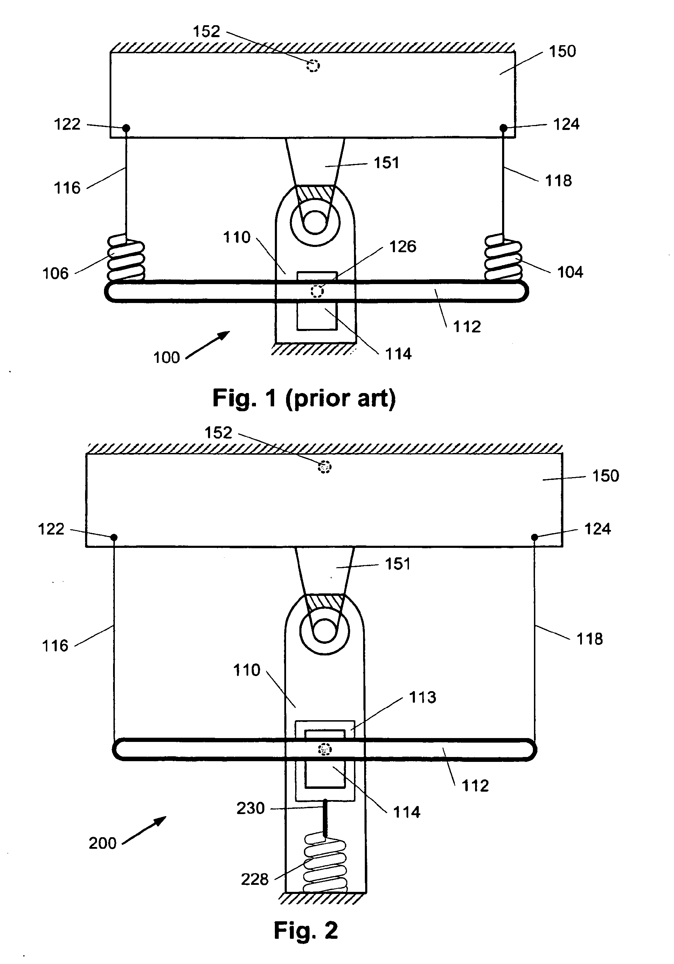

Because of slack in the shaft connection and because of the uneven field surfaces it is necessary to have a flexible connection between the implement and the tractor. It is further required that the connections are constantly extended, and in the prior art solution this is obtained by using a transmission mechanism with two separate springs for connecting the angle sensor to the tractor, these springs are part of each of the two spaced apart connections and they are mutually balanced. Such a transmission mechanism, comprising the features defined in the preamble of claim 1, is represented in Fig.1. A problem with this solution is that the angle sensor is very sensitive to the friction between the elements of the transmission mechanism as these cannot be overcome. In addition, external forces such as e.g. crop striking the two spaced apart connections can influence the measurement of the yaw angle negatively.

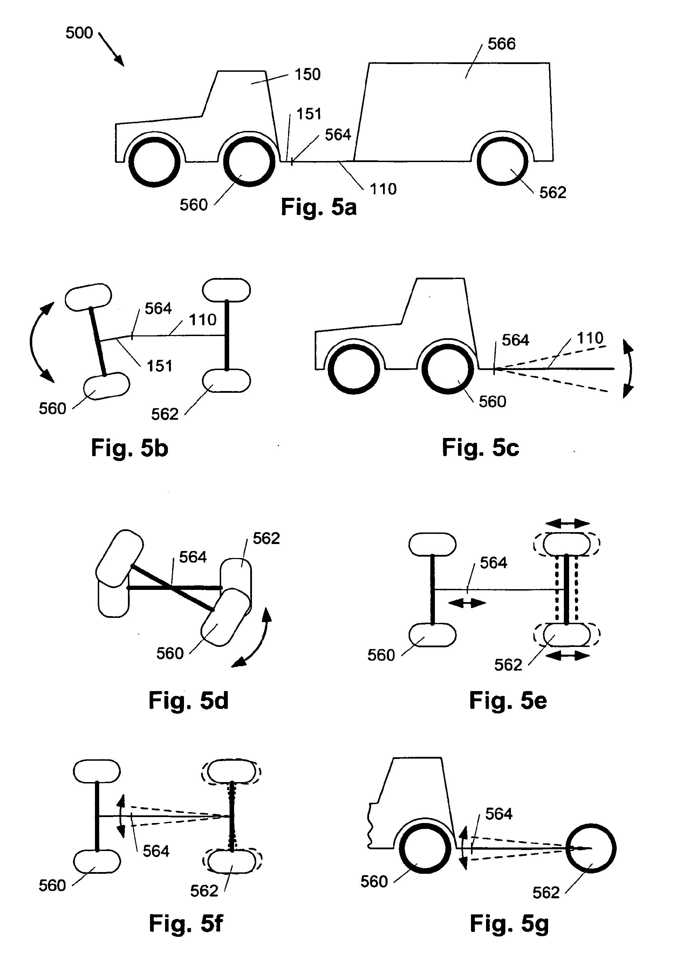

Another prior art solution is provided in the utility model DK 1997 00231, where the angle sensor is connected to an arm. The arm is again connected to the tractor via a wire and via a spring to the implement. In this prior art solution, yaw angle will both be influenced by the actual yaw angle, but unfortunately also by the displacements in the connection or hitch between the tractor and the implement, particularly the displacements back and forth (see figure 5e).

### OBJECT AND SUMMARY OF THE INVENTION

The object of the invention is to solve the above-mentioned problems.

The present invention solves the above-mentioned problems by providing a transmission mechanism as defined in claim 1 and a method as defined in claim 8.

The connection is flexible and comprises two spaced apart flexible connection arms which in one end is connected to one of the equipment parts and in the other end is connected to a spacer part mounted on the angle sensor. According to the invention the transmission mechanism comprises a common tightening element for tightening the flexible connection arms, thereby ensuring a tight connection between the angle sensor and one of the equipment parts. This is advantageous as high precision measure of the angle between the equipment parts is obtained. This is essential as the accuracy and the validity of the angle measure is used as the reference value in the control system, e.g. for steering the direction of the implement and thereby the wheel tracks. Further, the transmission mechanism of the present invention eliminates the disturbance of yaw angle signal due to roll and pitch movements and due to displacements in the connection between the tow bar of the tractor and the draw bar of the implement. Further, the pre-tension of the common tightening element is so strong that it can overcome the friction between the different elements of the transmission mechanism. These advantages of the transmission mechanism of the present invention enables e.g. an implement to be driven in the same tracks as a tractor, a higher yield from fields of crop can be achieved.

In one embodiment of the transmission mechanism the common tightening element is a common spring. The advantage of having one common spring is that it dampens or requires larger force to overcome spring pre-tensioning from external impacts on the connection between e.g. a tractor and an implement.

In another embodiment of the transmission element the spring is an integrated part of the spacer element in the form of a common twisting spring. Apart from the above listed advantages, this particular embodiment is also advantageous as the spacer element comprises a number of functionalities in only one element.

In yet another embodiment of the transmission mechanism the flexible connection arms are chains. Here the advantages are as listed above.

In a further embodiment of the transmission mechanism the spacer part and the connection part are formed by at least one common wire with a tightening element integrated in the spacer part. Here the advantages are as mentioned above.

In one embodiment of the transmission mechanism the common tightening element is a weight element. This is particularly advantageous when the transmission element is embodied as a wire pull.

In another embodiment an equipment part is adapted to be connected to another equipment part, wherein the equipment part comprises a transmission mechanism according to the present invention. Here the advantages are as mentioned above.

In yet another embodiment the present invention relates to a method to be used when connecting an angle sensor between two equipment parts such as an implement and a tractor, where the angle sensor is adapted to measure the angle between the equipment parts, wherein the connection is flexible and comprises two spaced apart flexible connection arms which in one end is connected to one of the equipment parts and in the other end is connected to a spacer part mounted on the angle sensor, characterized in that the method comprises tightening of the flexible connection arms and thereby ensuring a tight connection between the angle sensor and the equipment part by using a common tightening element. Here the advantages are as mentioned above.

### BRIEF DESCRIPTION OF THE DRAWINGS

In the following, preferred embodiments of the invention will be described referring to the figures, where
figure 1 illustrates prior art connection between tractor and implement comprising a transmission mechanism;
figure 2 illustrates a top view of a first embodiment of the present invention,
figure 3 illustrates a top view of a second embodiment of the present invention;
figure 4 illustrates a top view of the principle of a third embodiment of the present invention;
figure 5a illustrates a combined vehicle comprising a tractor and an implement;
figures 5b-g illustrate the three types of rotation and the three kinds of displacement in the connection or hitch between the tractor and the implement.

### DESCRIPTION OF EMBODIMENTS

Figure 1 illustrates a prior art connection between a tow bar 151 of a tractor 150 and the draw bar 110 of an implement comprising a transmission mechanism 100. The transmission mechanism 100 is fastened to the draw bar 110 of the implement. The transmission mechanism 100 comprises a spacer 112 rotationally connected to the shaft or axle 126 of the angle sensor 114. A spring 104, 106 is fastened to each end of the spacer 112. One end of the two wires 116, 118 is fastened to the tractor 150 and the other to the two springs 104, 106 fastened to the spacer 112 of the transmission mechanism 100. The distance between the two fastenings points 122, 124 on the tractor 150 essentially equals the length of the spacer 112. When the tractor moves, the spacer 112 will follow the turning of the tractor 150 around the rotation point 152, such that the line going through the two fastenings points 122, 124 on the tractor is substantially parallel to the longitudinal axis of the spacer 112. The angle between the tow bar 151 and the draw bar 110 is via the spacer 112 measured by the angle sensor 114 and transmitted to e.g. a hydraulic system (not shown) controlling the direction of the wheel on the implement. Hereby the wheels on the implement can be set to run in the wheel tracks from the tractor. However, due to the draw bar and tow bar design practices, the distance between the tractor and the spacer will not always be constant (see figures 5c-5g). To compensate for this the transmission mechanisms traditionally comprise springs 104, 106 whereby wires 116, 118 are kept tight. This is, however, problematic as the difference in spring force between the two springs cannot overcome the friction between the different parts of the transmission mechanism 100, particularly at minor changes in the angle between tow bar 151 and the draw bar 110. The friction occurs between tractor 150 and wire 116 and 118, between spacer 112 and spring 104, 106 and finally between spacer 112 and angle sensor 114. The two springs 104, 106 cannot overcome this friction as the pre-tensioning of the two springs counterbalance each other. The difference between the forces of the two springs is the resulting force which can move the spacer 112 into a correct position parallel to the tractor. The difference in the pulling force of the two springs is proportional to the difference in the extension of the two springs which is usually a force of a low magnitude. This small force can therefore not move the spacer 112 such that it is completely parallel to the tractor 150 (meaning the spacer 112 will not be parallel to the line through 122, 124). Thus, even small deviations in the measured angle will lead the implement to take a different and indeed very undesired direction than the tractor 150. Hence, the implement will not follow the tracks of the tractor 150. In this case it does not help to change the pre-tensioning of the springs 104, 106.

Also, when e.g. the spacer 112, wires 116, 118 or springs 104, 106 of the transmission mechanism 100 are stroke or hit by e.g. crop or stone, the spacer will oscillate and thereby create noise in the measurement of the yaw angle. This is very disadvantageous as this signal is difficult to process and subsequently use in controlling the direction of the trailer. These oscillations occur because the transmission mechanism 100, when fastened to the tractor, corresponds to a system in simple harmonic motion.

Figure 2 illustrates a top view of a first embodiment of the present invention showing the coupling between the tow bar 151 of a tractor 150 and the draw bar 110 of an implement. The transmission mechanism 200 is fastened to the draw bar 110 of an implement and comprises an angle sensor 114 and a spacer 112. The transmission mechanism 200 is by means of two wires 116, 118 connected parallel to two fastening points 122, 124 on a tractor 150, which when turning rotates around the point 152. The wires 116, 118 are of equal length and are connected to each end of the spacer 112 and fastened to corresponding fastening points 122, 124 on the tractor 150. The distance between the two fastening points 122, 124 and the two fastening points (not indicated) on the respective ends of the spacer 112 are essentially the same. The center of the spacer 112 is fastened to the angle sensor 114 via the shaft or axle 126 around which the spacer 112 can rotate. When the tractor moves, the spacer 112 will rotate correspondingly so that the line going through the two fastenings points 122, 124 is parallel to the longitudinal axis of the spacer 112. In order to do so, the connection between the spacer 112 and the fastenings points on the tractor has to be tight. This is enabled by the spring 228 that via a wire 230 is fastened to the displacement plate 113 which again is displaceable fastened to the draw bar 110. Thus, the angle sensor 114 can e.g. by means of a rail (not shown) move relative to the draw bar 110 unidirectional along the longitudinal axis of the tow bar 110 of the implement. As the wires 116, 118 are always to be kept tight, they will also be parallel. The angle between the tow bar 110 and the spacer 112 measured by the angle sensor 114 is transmitted to e.g. a hydraulic system (not shown) controlling the direction of the wheel on the trailer. Hereby the wheels on the trailer can be set to run in the wheel tracks from the tractor. As the wires 116, 118 are kept tight by only one spring 228, the yaw angle measured by the angle sensor 114 is insensitive to the noise created by rotations (roll and pitch) and displacing movements. This means that the spring 228 dampens or requires larger force to overcome spring pre-tensioning from external impacts on the connection between the tractor 150 and the implement.

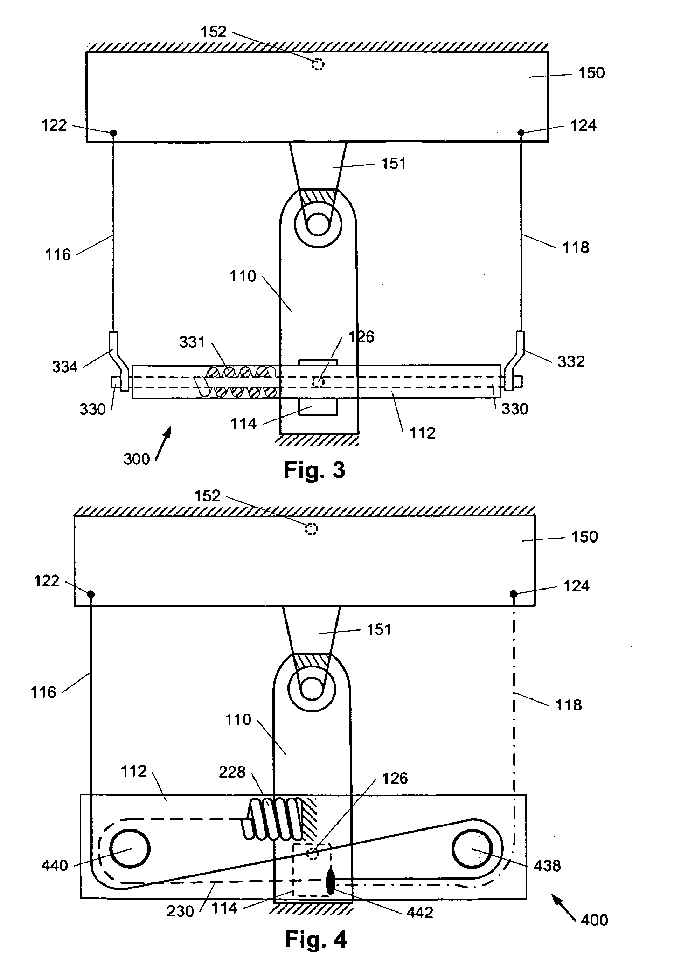

Figure 3 illustrates a top view of a second embodiment of the present invention, showing the coupling between the tow bar 151 of a tractor 150 and the draw bar 110 of an implement. The transmission mechanism 300 is fastened to e.g. a draw bar 110 of an implement and serves the same purpose as the transmission mechanism 200 described in figure 2. That is, the spacer 112 is connected to the two fastenings points 122, 124 via the wires 116, 118, whereby the spacer 112 and the line going through the two fastenings points 122, 124 can move parallel to each other. The wires 116, 118 are tightened by means of a torsion spring 331 comprised in the spacer 112. The torsion spring 331 is connected to the wire arms 332, 334 via the torsion axle 330 which again are connected to the wires 116, 118. The torsion spring 331 in the spacer 112 is a common spring, whereby the wire arm 332, 334 can rotate uniformly in each end of the spacer 112 around the longitudinal axis of the spacer 112. Hereby the wires 116, 118 are kept tight, whereby the spacer 112 and the line going through the two fastenings points 122, 124 and the wires 116, 118 will be parallel in pairs. The sole common torsion spring 331 comprised in the spacer 212 ensures that the angle measured by the angle sensor is insensitive to the noise created by rotations (roll and pitch) and displacing movements.

Figure 4 illustrates a top view of the principle of a third embodiment of the present invention, showing the coupling between the tow bar 151 of a tractor 150 and the draw bar 110 of an implement. The transmission mechanism 400 is in this embodiment designed as a rope pull comprising one spring 228. One end of the two wires 116, 118 is connected to two fastening points 122, 124 on e.g. a tractor 150, which when turning rotates around the point 152. The wire 116 extends around runner 440 and then runner 438 and is at the other end connected to the fastening point 442. The wire 118 extends around runner 438 and the other end is connected to the fastening point 442. The wire 230 extends around the runner 440, where one end of the wire 230 is connected to the fastening point 442 and the other is connected to the spring 228. The spring 228 and runner 438, 440 are fastened to a spacer 112 which is rotationally, via the shaft 126, fastened to an angle sensor 114, which again is fastened to the draw bar 110 of an implement (not shown). When the tractor 150 moves, the spacer 114 will rotate correspondingly so that the line going through the two fastenings points 122, 124 are parallel to a line going through the rotation axis of the two runners 438, 440. This is enabled by the spring 228 which keep all wires tight at all times. The yaw angle between the tow bar or draw bar 112 of the implement (not shown) and the spacer 114 can then be measured and the signal used to determine the wheel direction of the implement. The wires 116, 118, 230 extend and move around the runners 438, 440 in the same direction. In an alternative embodiment of the transmission mechanism more than two runners could be used to simplify the course of the wires 116, 118, 230.

A common advantage of the embodiments illustrated in figures 2, 3, and 4 is that the pre-tension of the springs 228, 331 can overcome friction between the tractor 150 and wire 116 and 118, between spacer 112 and spring 104, 106 and finally between spacer 112 and angle sensor 114. This is not possible with the mentioned prior art. This means that very small changes in the yaw angle are measured correctly, whereby it is ensured that the implement follows the tracks of the tractor. Thus, the pre-tension of the spring 228, 331 adds to the turning of the spacer 112. Further, these embodiments of the present invention eliminate the influence of roll, pitch and the three types of displacement described in figures 5c-g.

Figure 5a illustrates a combined vehicle 500 comprising a tractor 150 connected to an implement 566, and will through figures 5b-5g be used to illustrate the three types of rotations (yaw, pitch and roll) and three kinds of displacement. The present invention provides a transmission mechanism used to measure the yaw angle between the tractor and the implement, without being influenced by the other types of rotation and displacements. In order to illustrate these rotations and displacements, only a few elements of the tractor and the implements are used. These are the left rear wheel 560 of the tractor, the left wheel 562 of the implement 566 and the connection point 564 of the tow bar 151 of the tractor 150 and the draw bar 110 of the implement 566.

Figure 5b illustrates the rotation angle, yaw. This is the angle between the tow bar 151 and the draw bar 110 and arises when the tractor turns. The yaw angle is the angle used to change or control the direction of the wheels of the implement such that they essentially follow the tracks of the tractor. If only the yaw angle existed, the prior art solutions were very applicable. However, the two rotation angles and the three types of displacement to be described in the following can all influence the measurement of the yaw angle. Therefore the prior cannot be applied.

Figure 5c illustrates the rotation angle, pitch. The situation here is that the draw bar 110 of the implement is placed higher or lower relative to the horizontal line going through the connection point 564. This will either increase of decrease the distance from the fastening points 122, 124 to the spacer 112 of figures 1-4. This will affect the measurement of the yaw angle (figure 5b) if not accounted for by the transmission mechanism measuring the yaw angle.

Figure 5d illustrates the rotation angle, roll. Here the left rear wheel 560 of the tractor (not shown) is positioned lower relative to the right rear wheel of the tractor (not indicated). This means that the tractor (not shown) heels to the left and rolls relative to a horizontal axis. Since the implement is oriented horizontally, the roll angle between the tractor and the implement will affect the measurement of the yaw angle (figure 5b). This must be accounted for by the transmission mechanism measuring the yaw angle.

Figure 5e illustrates the longitudinal displacement between the tractor and the implement arising due to the clearance in the connection point 564 between the tow bar (151, not indicated here) and draw bar (110, not indicated here). Since the tractor is the towing vehicle, the displacements will be caused by back and forth movements of the implement relative to the tractor indicated by the arrows. This will either increase of decrease the distance from the fastening points 122, 124 to the spacer 112 of figures 1-4. This will affect the measurement of the yaw angle (figure 5b), if not accounted for by the transmission mechanism measuring the yaw angle.

Figure 5f illustrates the transversal displacement between the tractor and the implement arising due to the clearance in the connection point 564 between the tow bar (151, not indicated here) and draw bar (110, not indicated here). Since the tractor is the towing vehicle, the displacements will be caused by sideways movements of the implement relative to the tractor indicated by the arrows. This will directly affect the measurement yaw angle (figure 5b) leading to deviations relative to the actual yaw angle. Thus, this must be accounted for in the measurement of the yaw angle (figure 5b).

Figure 5g illustrates vertical displacement in the connection point 564 between the tow bar (151, not indicated) and the draw bar (110, not indicated). Since the tractor is the towing vehicle, the displacements will be caused by up and down movements of the implement relative to the tractor indicated by the arrow. This will either increase of decrease the distance from the fastenings points 122, 124 to the spacer 112 of figures 1-4. This will affect the measurement of the yaw angle (figure 5b), if not accounted for by the transmission mechanism measuring the yaw angle.

The influence of roll, pitch and the three types of displacement, slack or skidding will normally not affect the measurement of the yaw angle one at the time, but jointly. The transmission mechanism of the present invention takes account for this when measuring the yaw angle by isolating their (roll, pitch, displacements) influence.

### REFERENCES

- 100: transmission mechanism
- 104: spring
- 106: spring
- 110: draw bar
- 112: spacer
- 114: angle sensor
- 116: wire
- 118: wire
- 122: fastening point
- 124: fastening point
- 126: axle or shaft
- 150: tractor
- 151: tow bar of tractor 150
- 152: rotation point of tractor 150 when turning
- 200: transmission mechanism
- 228: spring
- 230: wire
- 300: transmission mechanism
- 330: torsion axle
- 331: torsion spring
- 332: wire arm
- 334: wire arm
- 400: transmission mechanism
- 438: runner
- 440: runner
- 442: fastening point
- 500: tractor with implement
- 560: left rear wheel of tractor 150
- 562: left wheel of implement
- 564: connection point of tow bar 151 and draw bar 110
- 566: Implement

## Claims

1. A transmission mechanism (200, 300, 400) for measuring an angle between two equipment parts such as an implement (566) and a tractor (150), said transmission mechanism (200, 300, 400) comprising:
- an angle sensor (114) being adapted to measure said angle between the equipment parts (150, 566), and;
- two spaced apart flexible connection elements (116, 118, 332, 334) which in one end is connected to one of said equipment parts (150, 566) and in the other end is connected to a spacer part (112) mounted on said angle sensor (114);
**characterized in that** said transmission mechanism (200, 300, 400) further comprises a common tightening element (228, 331) for tightening said flexible connection elements (116, 118, 332, 334), thereby ensuring a tight connection between said angle sensor (114) and one of said equipment parts (150, 566).

2. A transmission mechanism according to claim 1, wherein said common tightening element (228, 331) is a common spring.

3. A transmission element according to claim 2, wherein said spring is an integrated part of said spacer part (112) in the form of a common torsion spring.

4. A transmission mechanism according to claims 1-3, wherein said flexible connection elements (116, 118) are chains.

5. A transmission mechanism according to claims 1-4, wherein at least one common wire (230) with a tightening element (228) is integrated in said spacer part (112).

6. A transmission mechanism according to claims 1-4, wherein said common tightening element (228) is a weight element.

7. An equipment part adapted to be connected to another equipment part, wherein said equipment part comprises a transmission mechanism according to claims 1-6.

8. A method to be used when measuring an angle between two equipment parts such as an implement (566) and a tractor (150), said method comprising an angle sensor (114) adapted to measure said angle between said equipment parts (150, 566), and two spaced apart flexible connection elements (116, 118, 332, 334) which in one end is connected to one of said equipment parts (150, 566) and in the other end is connected to a spacer part (112) mounted on said angle sensor (114), **characterized in that** the method further comprises tightening said flexible connection elements (116, 118, 332, 334) and thereby ensuring a tight connection between said angle sensor (114) and said equipment part (150, 566) by using a common tightening element (228, 331).

## Patentansprüche

1. Übertragungsmechanismus (200, 300, 400) zur Messung eines Winkels zwischen zwei Ausrüstungsteilen wie etwa einem Gerät (566) und einem Traktor (150), welcher Übertragungsmechanismus (200, 300, 400):
- einen zur Messung des Winkels zwischen den Ausrüstungsteilen (150, 566) angepassten Winkelsensor (114) und;
- zwei beabstandete flexible Verbindungselemente (116, 118, 332, 334), welche am einen Ende mit einem der Ausrüstungsteile (150, 566) verbunden sind und am anderen Ende mit einem am Winkelsensor (114) montierten Distanzstück (112) verbunden sind;
umfasst, **dadurch gekennzeichnet, dass** der Übertragungsmechanismus (200, 300, 400) zusätzlich ein gemeinsames Spannelement (228, 331) zum Spannen der flexiblen Verbindungselemente (116, 118, 332, 334) umfasst, damit eine feste Verbindung zwischen dem Winkelsensor (114) und einem der Ausrüstungsteile (150, 566) sichergestellt ist.

2. Übertragungsmechanismus nach Anspruch 1, wobei das gemeinsame Spannelement (228, 331) eine gemeinsame Feder ist.

3. Übertragungselement nach Anspruch 2, wobei die Feder ein integrierter Teil des Distanzstücks (112) in Form einer gemeinsamen Torsionsfeder ist.

4. Übertragungsmechanismus nach den Ansprüchen 1-3, wobei die flexiblen Verbindungselemente (116, 118) Ketten sind.

5. Übertragungsmechanismus nach den Ansprüchen 1-4, wobei zumindest ein gemeinsamer Draht (230) mit einem Spannelement (228) im Distanzstück (112) integriert ist.

6. Übertragungsmechanismus nach den Ansprüchen 1-4, wobei das gemeinsame Spannelement (228) ein Gewichtselement ist.

7. Ausrüstungsteil, der zum Verbinden mit einem anderen Ausrüstungsteil angepasst ist, wobei der Ausrüstungsteil einen Übertragungsmechanismus nach den Ansprüchen 1-6 umfasst.

8. Verfahren, das zu verwenden ist, wenn ein Winkel zwischen zwei Ausrüstungsteilen wie etwa einem Gerät (566) und einem Traktor (150) gemessen wird, welches Verfahren einen zur Messung des Winkels zwischen den Ausrüstungsteilen (150, 566) angepassten Winkelsensor (114) und zwei beabstandete flexible Verbindungselemente (116, 118, 332, 334) umfasst, welche am einen Ende mit einem der Ausrüstungsteile (150, 566) verbunden sind und am anderen Ende mit einem am Winkelsensor (114) montierten Distanzstück (112) verbunden sind, **dadurch gekennzeichnet, dass** das Verfahren zusätzlich ein Spannen der flexiblen Verbindungselemente (116, 118, 332, 334) umfasst, und damit durch Verwendung eines gemeinsamen Spannelements (228, 331) eine feste Verbindung zwischen dem Winkelsensor (114) und dem Ausrüstungsteil (15D, 566) sichergestellt wird.

## Revendications

1. Mécanisme de transmission (200, 300, 400) pour mesurer un angle entre deux pièces d'équipement telles qu'un outil (566) et un tracteur (150), ledit mécanisme de transmission (200, 300, 400) comprenant :
- un capteur d'angle (114) étant adapté à mesurer ledit angle entre les pièces d'équipement (150, 566), et;
- deux éléments de raccordement flexibles et espacés l'un de l'autre (116, 118, 332, 334) qui, à l'une extrémité, sont reliés à l'une desdites pièces d'équipement (150, 566) et, à l'autre extrémité, sont reliés à une pièce d'écartement (112) montée sur ledit capteur d'angle (114) ;
**caractérisé en ce que** ledit mécanisme de transmission (200, 300, 400) en outre comprend un élément de serrage commun (228, 331) pour serrer lesdits éléments de raccordement flexibles (116, 118, 332, 334), assurant un raccordement serré entre ledit capteur d'angle (114) et l'une desdites pièces d'équipement (150, 566).

2. Mécanisme de transmission selon la revendication 1, dans lequel ledit élément de serrage commun (228, 331) est un ressort commun.

3. Elément de transmission selon la revendication 2, dans lequel ledit ressort est une partie intégrée de ladite pièce d'écartement (112) dans la forme d'un ressort de torsion.

4. Mécanisme de transmission selon les revendications 1 à 3, dans lequel lesdits éléments de raccordement flexibles (116, 118) sont des chaînes.

5. Mécanisme de transmission selon les revendications 1 à 4, dans lequel au moins un fil commun (230) avec un élément de serrage (228) fait partie intégrante de ladite pièce d'écartement (112).

6. Mécanisme de transmission selon les revendications 1 à 4, dans lequel l'élément de serrage commun (228) est un élément de poids.

7. Pièce d'équipement adaptée à la liaison avec l'autre pièce d'équipement, où ladite pièce d'équipement comprend un mécanisme de transmission selon les revendications 1 à 6.

8. Procédé à utiliser pour la mesure d'un angle entre deux pièces d'équipement telles qu'un outil (566) et un tracteur (150), ledit procédé comprenant un capteur d'angle (114) étant adapté à mesurer ledit angle entre les pièces d'équipement (150, 566), et deux éléments de raccordement flexibles et espacés l'un de l'autre (116, 118, 332, 334) qui, à l'une extrémité, sont reliés à l'une desdites pièces d'équipement (150, 566) et, à l'autre extrémité, sont reliés à une pièce d'écartement (112) montée sur ledit capteur d'angle (114), **caractérisé en ce que** ledit procédé en outre comprend le serrage desdits éléments de raccordement flexibles (116, 118, 332, 334), assurant un raccordement serré entre ledit capteur d'angle (114) et ladite pièce d'équipement (150, 566) en utilisant un élément de serrage commun (228, 331).
